# EUROPEAN PATENT SPECIFICATION

(11) **EP 4 261 977 B1**
(45) Date of publication and mention of the grant of the patent: **29.04.2026**
(21) Application number: 22884097.1
(22) Date of filing: 21.10.2022
(51) Int. Cl.: H01M 10/058, H01M 10/42, H01M 4/13, H01M 10/052, H01M 4/62, H01M 4/02

(54) **ELECTRODE ASSEMBLY AND BATTERY CELL INCLUDING SAME**
ELEKTRODENANORDNUNG UND BATTERIEZELLE DAMIT
ENSEMBLE ÉLECTRODE ET CELLULE DE BATTERIE LE COMPRENANT

(30) Priority: 21.10.2021 KR 20210141113
(43) Date of publication of application: 18.10.2023
(73) Proprietor: LG Energy Solution, Ltd., Seoul 07335 (KR)
(72) Inventor: AHN, Seo Ryoung, Daejeon 34122 (KR)
(74) Representative: Plasseraud IP
(86) International application number: PCT/KR2022/016168
(87) International publication number: WO 2023/068875

(56) References cited:
- JP-A- 2006 040 878
- JP-A- 2019 003 789
- JP-B2- 6 381 045
- JP-B2- 6 572 204
- KR-A- 20160 060 096
- US-A1- 2006 127 774
- US-A1- 2017 373 299
- US-A1- 2018 366 786
- US-A1- 2021 210 761

## Description

### [TECHNICAL FIELD]

### Cross Citation with Related Application(s)

This application claims the benefit of Korean Patent Application No. 10-2021-0141113 filed on October 21, 2021 and Korean Patent Application No. 10-2022-0136343 filed on October 21, 2022 in the Korean Intellectual Property Office.

The present disclosure relates to an electrode assembly and a battery cell including the same, and more particularly to an electrode assembly that prevents deposition of lithium ions by preventing reversal of N/P ratio while minimizing capacity loss.

### [BACKGROUND]

With the technology development and increased demand for mobile devices, demand for secondary batteries as energy sources has been rapidly increasing. In particular, a secondary battery has attracted considerable attention as an energy source for power-driven devices, such as an electric bicycle, an electric vehicle, and a hybrid electric vehicle, as well as an energy source for mobile devices, such as a mobile phone, a digital camera, a laptop computer and a wearable device.

The secondary battery can be formed by inserting an electrode assembly composed of a positive electrode, a negative electrode and a separator into a case, and then sealing the case. Here, the electrode for a secondary battery, such as a positive electrode or a negative electrode is configured such that an active material layer and a non-coated portion, where the active material layer is not formed, may be formed on a current collector. The active material layer may be formed by coating an active material slurry. Further, the formation of active material layer may include a rolling process so as to increase adhesion to the electrode current collector and increase the active material capacity density. Document US 2017/373299 A1 shows an electrode assembly and a battery cell of the prior art.

### [DETAILED DESCRIPTION OF THE INVENTION]

### [Technical Problem]

It is an object of the present disclosure to provide an electrode assembly that prevents deposition of lithium ions by preventing reversal of N/P ratio while minimizing capacity loss,

The objects of the present disclosure are not limited to the aforementioned objects, and other objects which are not mentioned herein should be clearly understood by those skilled in the art from the following detailed description and the accompanying drawings.

### [Technical Solution]

The invention is defined by the subject-matter of the independent claim 1. The dependent claims are directed to advantageous embodiments.

According to one embodiment of the present disclosure, there is provided an electrode assembly comprising: a positive electrode that includes a positive electrode current collector and a positive electrode active material layer located on the positive electrode current collector; and a negative electrode that includes a negative electrode current collector and a negative electrode active material layer located on the negative electrode current collector, wherein the positive electrode and the negative electrode are arranged in a direction in which the positive electrode active material layer and the negative electrode active material layer face each other, wherein the positive electrode includes an insulating coating layer that covers from an end part of the positive electrode active material layer to at least a part of the positive electrode active material layer, and wherein the insulating coating layer includes at least one protrusion that protrudes toward the central portion of the positive electrode active material layer on the basis of an end part of the positive electrode active material layer.

The positive electrode current collector includes a first non-coated portion where the positive electrode active material layer is not located, and the negative electrode current collector may include a second non-coated portion where the negative electrode active material layer is not located.

The insulating coating layer extends to at least a part of the first non-coated portion on the basis of a boundary line between the first non-coated portion and the positive electrode active material layer.

At this time, the insulating coating layer may cover the first non-coated portion in a range of 10% to 50% based on the total area of the first non-coated portion, and the ratio of covering the positive electrode active material layer and the first non-coated portion in the insulating coating layer may be a width ratio of 2:1 to 1:2.

The end part of the positive electrode active material layer is made thinner than the thickness of the central portion of the positive electrode active material layer as it goes toward the first non-coated portion, and the end part of the negative electrode active material layer is made thinner than the thickness of the central portion of the negative electrode active material layer as it goes toward the second non-coated portion.

The length of the protrusion is a length to the positive electrode active material layer facing a region of the negative electrode active material layer having a thickness of 0.9 or more and 1.0 or less relative to the thickness of the central portion of the negative electrode active material layer, on the basis of a boundary line between the positive electrode active material layer and the first non-coated portion. A portion of the positive electrode active material layer may have the same thickness as the thickness of the central portion of the positive electrode active material layer.

The width of the protrusion may be a range of absolute values in which the range of 20% to 50% relative to the width of the positive electrode active material layer is divided by the number of the protrusions.

The length of the first non-coated portion may be equal to or greater than the length of the second non-coated portion.

The protrusion may be formed of two or more protrusions, which may be spaced apart from each other.

At this time, the distance by which the protrusions may be spaced apart from each other is equal to or smaller than the width of the protrusions.

The insulating coating layer may be made of a material through which lithium ions do not pass.

A separator may be located between the positive electrode and the negative electrode.

According to yet another embodiment of the present disclosure, there is provided a battery cell comprising the above-mentioned electrode assembly.

### [BRIEF DESCRIPTION OF THE DRAWINGS]

Fig. 1 is a cross-sectional view showing a conventional electrode assembly;
Fig. 2 is a cross-sectional view showing a part of an electrode assembly according to one embodiment of the present disclosure;
Fig. 3 is a cross-sectional view showing a positive electrode included in the electrode assembly of Fig. 2; and
Fig. 4 is a top view of the positive electrode of Fig. 3.

### [DETAILED DESCRIPTION OF THE EMBODIMENTS]

Hereinafter, various embodiments of the present disclosure will be described in detail with reference to the accompanying drawings so that those skilled in the art can easily carry out them. The present disclosure may be modified in various different ways, and is not limited to the embodiments set forth herein.

Portions that are irrelevant to the description will be omitted to clearly describe the present disclosure, and like reference numerals designate like elements throughout the description.

Further, in the drawings, the size and thickness of each element are arbitrarily illustrated for convenience of description, and the present disclosure is not necessarily limited to those illustrated in the drawings. In the drawings, the thickness of layers, regions, etc. are exaggerated for clarity. In the drawings, for convenience of description, the thicknesses of a part and an area are exaggeratedly illustrated.

Further, throughout the description, when a portion is referred to as "including" or "comprising" a certain component, it means that the portion can further include other components, without excluding the other components, unless otherwise stated.

Further, throughout the description, when it is referred to as "planar", it means when a target portion is viewed from the upper side, and when it is referred to as "cross-sectional", it means when a target portion is viewed from the side of a cross section cut vertically.

Hereinafter, an electrode assembly according to one embodiment of the present disclosure will be described. However, although one positive electrode and one negative electrode of the electrode assembly will be mainly described, the electrode assembly is not necessarily limited thereto, and even a structure in which a plurality of positive electrodes and a plurality of negative electrodes are alternately arranged may be described in the same or similar manner.

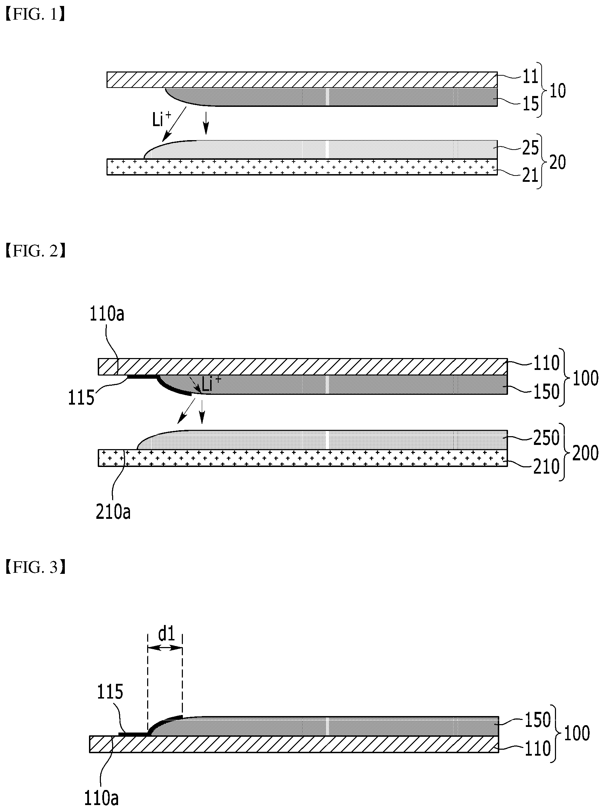

Fig. 1 is a cross-sectional view showing a conventional electrode assembly.

Referring to Fig. 1, the conventional electrode assembly includes a positive electrode 10 and a negative electrode 20, wherein the positive electrode 10 is configured to locate a positive electrode active material layer 15 on a positive electrode current collector 11, and the negative electrode 20 is configured to locate a negative electrode active material layer 25 on a negative electrode current collector 21.

Generally, with respect to the positive electrode 10 and the negative electrode 20, the N/P ratio is measured as an index for the safety and capacity of the battery. Here, the N/P ratio is a value in which a value from the negative electrode charge capacity minus the negative electrode irreversible capacity is divided by a value from the positive electrode charge capacity minus the larger value of the positive electrode irreversible capacity and the negative electrode irreversible capacity.

At this time, the N/P ratio should generally be 100 or more because it has a significant effect on safety and capacity. In other words, unlike the same, if the N/P ratio is less than 100, it can be expressed that the N/P ratio has reversed, which causes a problem that lithium ions are easily deposited on the surface of the negative electrode 20 during charging and discharging, and the safety of the battery is rapidly deteriorated during high-rate charging and discharging.

Thus, with respect to the positive electrode 10 and the negative electrode 20, it is necessary to design the size, position, shape, etc. of the positive electrode 10 and the negative electrode 20 so that the N/P ratio is 100 or more.

Referring to Fig. 1, lithium ions migrate from the positive electrode active material layer 15 to the negative electrode active material layer 25. At this time, generally, due to the flowability of the positive electrode slurry or the negative electrode slurry in the process, the thicknesses of the end part of the positive electrode active material layer 15 and the end part of the negative electrode active material layer 25 are gradually made thinner.

At this time, due to the position and/or thickness difference between the end part of the positive electrode active material layer 15 and the end part of the negative electrode active material layer 25, a problem arises that N/P ratio is reversed at a position where the end part of the positive electrode active material layer 15 and the end part of the negative electrode active material layer 25 face each other. In particular, when the extent to which the end part of the negative electrode active material layer 25 is made thinner is greater than the extent to which the end part of the positive electrode active material layer 15 is made thinner, such a problem is more likely to occur.

When the N/P ratio is reversed in this way, there is a problem that lithium ions do not completely migrate from the positive electrode active material layer 15 to the negative electrode active material layer 25, and a part of the lithium ions are deposited on the surface of the negative electrode 20.

As a result, unlike the conventional electrode assembly, there is a need to develop an electrode assembly that prevents deposition of lithium ions and a battery cell including the same by preventing reversal of N/P ratio while minimizing capacity loss.

Fig. 2 is a cross-sectional view showing a part of an electrode assembly according to one embodiment of the present disclosure.

Referring to Fig. 2, the electrode assembly according to one embodiment of the present disclosure includes a positive electrode 100 that includes a positive electrode current collector 110 and a positive electrode active material layer 150 located on the positive electrode current collector 110; and a negative electrode 200 that includes a negative electrode current collector 210 and a negative electrode active material layer 250 located on the negative electrode current collector 210.

More specifically, the positive electrode 100 and the negative electrode 200 may be arranged in a direction in which the positive electrode active material layer 150 and the negative electrode active material layer 250 face each other. In addition, although not shown in Fig. 2, a separator (not shown) may be located between the positive electrode 100 and the negative electrode 200. More specifically, the separator (not shown) may be located between the positive electrode active material layer 150 and the negative electrode active material layer 250 facing each other.

The positive electrode current collector 110 is not particularly limited as long as it has conductivity without causing chemical changes to the corresponding battery. For example, stainless steel, aluminum, nickel, titanium, calcined carbon, or a material formed by surface-treating a surface of aluminum or stainless with carbon, nickel, titanium, silver, or the like

The positive electrode active material layer 150 can be manufactured in a form in which the positive electrode slurry containing the positive electrode active material is attached or applied onto the positive electrode current collector 110, and the positive electrode slurry may further include a conductive material and a polymer material, in addition to the positive electrode active material.

The positive electrode active material may include, for example, lithium cobalt oxide (LiCoO₂), lithium nickel oxide (LiNiO₂); lithium manganese oxide; lithium copper oxide (Li₂CuO₂); vanadium oxide; a Ni-site type lithium nickel oxide; lithium manganese composite oxide; lithium manganese composite oxide having a spinel structure; LiMn₂O₄ in which a part of Li in formula is substituted with an alkaline earth metal ion, a disulfide compound; Fe₂(MoO₄)₃, and the like.

The negative electrode current collector 210 is not particularly limited as long as it has high conductivity without causing chemical changes to the corresponding battery. For example, copper, stainless steel, aluminum, nickel, titanium, calcined carbon, or a material formed by surface-treating the surface of copper or stainless steel with carbon, nickel, titanium, silver or the like, an aluminum-cadmium alloy, and the like.

The negative electrode active material layer 250 can be manufactured in a form in which the negative electrode slurry containing the negative electrode active material is attached or applied onto the negative electrode current collector 210, and the negative electrode slurry may further include a conductive material and a polymer material, in addition to the negative electrode active material.

As the negative electrode active material, a common negative electrode active material for lithium secondary batteries in the art can be used. In one example, a material such as lithium metal, lithium alloy, petroleum cork, activated carbon, graphite, silicon, tin, metal oxide or other carbons can be used.

The separator (not shown) separates the positive electrode 100 and the negative electrode 200, and provides a passage for migrating lithium ions. Any separator can be used without particular limitation as long as it is generally used as a separator in a lithium secondary battery. Particularly, a separator having excellent moisture-retention ability for an electrolyte while having low resistance to the migration of electrolyte ions is preferable.

Referring to Fig. 2, the positive electrode current collector 110 may include a first non-coated portion 110a where the positive electrode active material layer 150 is not located, and the negative electrode current collector 210 may include a second non-coated portion 210a where the negative electrode active material layer 250 is not located. Here, a positive electrode tab (not shown) may be attached to a part of the first non-coated portion 110a, and a negative electrode tab (not shown) may be attached to a part of the second non-coated portion 210a. Thereby, the positive electrode 100 and the negative electrode 200 may be electrically connected to mutually different positive electrodes 100 or 200 through the positive electrode tab (not shown) and the negative electrode tab (not shown), and can be electrically connected to external components.

More specifically, the length of the first non-coated portion 110a may be equal to or greater than the length of the second non-coated portion 210a. In other words, the distance between the end part of the positive electrode active material layer 150 and the end part of the positive electrode current collector 110 may be equal to or greater than the distance between the end part of the negative electrode active material layer 250 and the end part of the negative electrode current collector 210. That is, since the end part of the negative electrode active material layer 250 is located at an outer side than the end part of the positive electrode active material layer 150, so that the area of the negative electrode active material layer 250 can be larger than the area of the positive electrode active material layer 150.

Thereby, in the electrode assembly according to the present embodiment, the reaction area of the negative electrode active material layer 250 facing the end part of the positive electrode active material layer 150 is relatively large, so that lithium ions can easily migrate from the end part of the positive electrode active material layer 150 to the negative electrode active material layer 250. That is, the present embodiment can minimize the risk that N/P ratio is reversed, and can also prevent deposition of lithium ions.

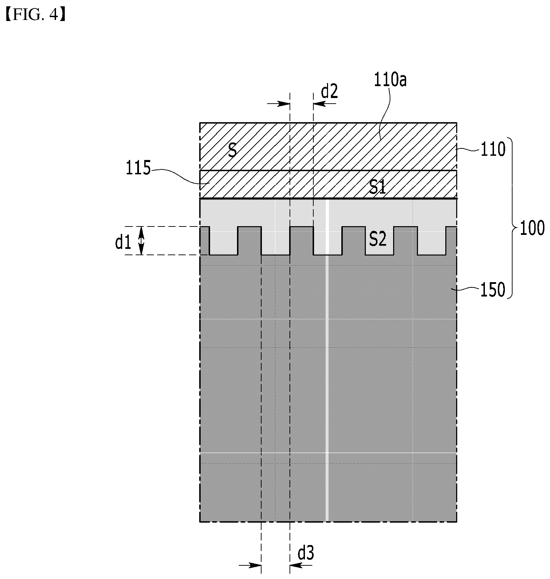

Fig. 3 is a cross-sectional view showing a positive electrode included in the electrode assembly of Fig. 2. Fig. 4 is a top view of the positive electrode of Fig. 3.

Referring to Figs. 3 and 4, the positive electrode 100 includes an insulating coating layer 115 that cover from an end part of the positive electrode active material layer 150 to at least a part of the positive electrode active material layer 150. In other words, the insulating coating layer 115 may cover up to at least a part of the positive electrode active material layer 150 on the basis of a boundary line between the first non-coated portion 110a and the positive electrode active material layer 150.

Here, the insulating coating layer 115 may be made of a material through which lithium ions do not pass. In one example, the insulating coating layer 115 may be made of a material such as polyvinylidene fluoride (PVDF), a mixture of PVDF and ceramic, a mixture of ceramic and SBR (Styrene Butadiene Rubber). However, the present disclosure is not limited thereto, and any material through which lithium ions do not pass can be included in the present embodiment.

Thereby, the electrode assembly according to the present embodiment can adjust the area of the positive electrode active material layer 150 facing the end part of the negative electrode active material layer 250 through the insulating coating layer 115 covered on a part of the positive electrode active material layer 150. That is, the reaction area of the negative electrode active material layer 250 facing the end part of the positive electrode active material layer 150 is relatively controlled, thereby preventing the N/P ratio from being reversed.

Further, the insulating coating layer 115 may extend to at least a part of the first non-coated portion 110a on the basis of a boundary line between the first non-coated portion 110a and the positive electrode active material layer 150. In other words, the insulating coating layer 115 may extend toward the first non-coated portion 110a and the positive electrode active material layer 150 on the basis of a boundary line between the first non-coated portion 110a and the positive electrode active material layer 150, respectively.

At this time, the insulating coating layer 115 may cover the first non-coated portion 110a in a range S1 of 10% to 50% on the basis of the total area S of the first non-coated portion 110a.

When the insulating coating layer 115 covers too many first non-coated portion 110a outside the above range, an insulating coating layer 115 may be formed in the area to which the tab attaches, which may thus affect the conductivity. When the insulating coating layer covers too small first non-coated portion, the boundary line between the positive electrode active material layer 150 and the first non-coated portion 110a is likely to be exposed, which is not preferable.

Moreover, as long as it is a shape of covering a part of the positive electrode active material layer 150 and a part of the first non-coated portion 110a, the area ratio is not limited, but for example, the ratio of covering the positive electrode active material layer 150 and the first non-coated portion 110a may be an area ratio (S2: S1) of 2:1 to 1:2.

When the positive electrode active material layer 150 is covered too much, the capacity loss may be increased, and when it is covered too little, the effect of preventing reversal of N/P ratio cannot be sufficiently obtained. Thus, it is more preferable that the insulating coating layer 115 covers the positive electrode active material layer 150 and the first non-coated portion 110a within the above width ratio.

Thereby, the electrode assembly according to the present embodiment is configured such that the insulating coating layer 115 covers a boundary line between the first non-coated portion 110a and the positive electrode active material layer 150, so that the effect of preventing reversal of N/P ratio by the insulating coating layer 115 can be further improved.

Referring to Figs. 3 and 4, the insulating coating layer 115 includes at least one protrusion protruding toward the central portion of the positive electrode active material layer 150 on the basis of the end part of the positive electrode active material layer 150. In one example, the at least one protrusion may have a square shape as shown in Fig. 4. However, the shape of the at least one protrusion is not limited thereto, and any shape capable of covering the positive electrode active material layer 150 while being spaced apart from each other can be included in the present embodiment.

Thereby, the electrode assembly according to the present embodiment can adjust the area of the positive electrode active material layer 150 facing the edge of the negative electrode active material layer 250, through the size and/or shape of the protrusion included in the insulating coating layer 115. That is, by adjusting the reaction area of the negative electrode active material layer 250 facing the end part of the positive electrode active material layer 150, it is possible to prevent N/P ratio from being reversed.

Referring to Fig. 2, the end part of the positive electrode active material layer 150 is made thinner than the thickness of the central portion of the positive electrode active material layer 150 as it goes toward the first non-coated portion 110a, and the end part of the negative electrode active material layer 250 may be made thinner than the thickness of the central portion of the negative electrode active material layer 250 as it goes toward the second non-coated portion 210a. More specifically, in the positive electrode 100, as the positive electrode slurry is applied onto the positive electrode current collector 110, the positive electrode active material layer 150 located at the boundary between the positive electrode active material layer 150 and the first non-coated portion 110a may gradually decrease in thickness due to the flowability of the positive electrode slurry. This can be similarly explained even in the case of the negative electrode 200.

Further, in the positive electrode active material layer 150, the remainder except for both end parts of the positive electrode active material layer 150 may mean the central portion of the positive electrode active material layer 150. Here, the central portion of the positive electrode active material layer 150 may have a flat thickness, unlike the end part of the positive electrode active material layer 150. Here, the flat thickness may mean having the same or similar thickness to each other. This can similarly be explained even in the case of the negative electrode 200.

Referring to Figs. 2 and 4, the protrusion extends from an end part of the positive electrode active material layer 150 to a part of the positive electrode active material layer 150. Here, a part of the positive electrode active material layer 150 may have the same thickness as the central portion of the positive electrode active material layer 150.

Here, the length d1 of the protrusion is determined on the basis of the thickness of the negative electrode active material layer 250 facing the positive electrode active material layer 150.

Generally, the electrode assembly is designed such that the N/P ratio is 110 or more on the basis of a flat portion such as the central portion of the positive electrode active material layer 150 and a flat portion such as the central portion of the negative electrode active material layer 250, and such a value can be referred to as a pre-designed N/P ratio. At this time, the thickness of the negative electrode active material layer 250 facing the flat portion such as the central portion of the positive electrode active material layer 150 relative to the thickness of the central portion of the negative electrode active material layer 250 may satisfy 100/A or more (A = pre-designed N/P ratio). In one example, when the pre-designed N/P ratio is 110, the thickness of the negative electrode active material layer 250 facing the flat portion such as the central portion of the positive electrode active material layer 150 relative to the thickness of the central portion of the negative electrode active material layer 250 should be about 0.9 or more.

Thus, if the thickness of the negative electrode active material layer 250 facing the positive electrode active material layer 150 is 0.9 or more relative to the thickness of the central portion of the negative electrode active material layer 250, the N/P ratio in the corresponding portion can be regarded as having a value of 100 or more.

More specifically, referring to Figs. 3 and 4, the length d1 of the protrusion may be a length to the positive electrode active material layer 150 facing a region of the negative electrode active material layer 250 having a thickness of 0.9 or more and 1.0 or less relative to the thickness of the central portion of the negative electrode active material layer 250, on the basis of a boundary line between the positive electrode active material layer 150 and the first non-coated portion 110a.

Accordingly, the length d1 of the protrusion is included in the above-mentioned range, so that the N/P ratio can have a value of 100 or more, and deposition of lithium ions can also be prevented.

Unlike the same, when the length d1 of the protrusion is a length to the positive electrode active material layer 150 facing a region of the negative electrode active material layer 250 having a thickness of less than 0.9 relative to the thickness of the central portion of the negative electrode active material layer 250, on the basis of a boundary line between the positive electrode active material layer 150 and the first non-coated portion 110a, the N/P ratio may have a value less than 100. That is, in this case, the N/P ratio may be reversed, which may cause a problem that lithium ions are easily deposited.

In addition, the width d3 of the protrusions may be in the range of an absolute value in which a range of 20% to 50% relative to the width of the positive electrode active material layer 150, namely, the direction of the interface between the positive electrode active material layer and the first non-coated portion is divided by the number of protrusions.

For example, when two protrusions are formed, the width d3 of each protrusion may be 10% (20/2) to 25% (50/2) relative to the width of the positive electrode active material layer 150, and when five protrusions are formed as shown in Fig. 4, the width d3 of each protrusion may be in the range of 4% (20/5) to 10% (50/5) relative to the width of the positive electrode active material layer 150.

In addition, in the electrode assembly according to the present embodiment, the insulating coating layer 115 is located on the positive electrode 100, And lithium ions migrating from the positive electrode active material layer 150 toward the negative electrode active material layer 250 migrate to the positive electrode active material layer 150 where the insulating coating layer 115 is not formed as shown in Fig. 2, and can migrate to the outside of the positive electrode active material layer 150.

However, in this case, as the migration distance of lithium ions increases due to the insulating coating layer 115, there may occur when a part of the lithium ions in the positive electrode active material layer 150 do not participate in the reaction during charging and discharging, thus causing a problem of capacity loss.

In consideration of the above, the electrode assembly according to the present embodiment is configured such that the protrusion is formed of two or more protractions in the insulating coating layer 115 as shown in Fig. 4, and these protrusions may be spaced apart from each other. In other words, two or more protrusions can be formed to expose the positive electrode active material layer 150 between the protrusions toward the negative electrode active material layer 250.

Accordingly, a part of the lithium ions in the positive electrode active material layer 150 may migrate to the negative electrode active material layer 250 through the positive electrode active material layer 150 exposed between the protrusions of the insulating coating layer 115.

That is, the electrode assembly according to the present embodiment can cover a part of the positive electrode active material layer 150 with the insulating coating layer 115 to prevent reversal of N/P ratio, and also can expose a part of the positive electrode active material layer 150 toward the negative electrode active material layer 250 between the protrusions of the insulating coating layer 115, thereby minimizing capacity loss due to the insulating coating layer 115.

Further, referring to Fig. 4, in the insulating coating layer 115, a distance d2 at which the protrusions are spaced apart from each other may be equal to or smaller than a width d3 of the protrusions.

In one example, a distance d2 by which the protrusions are spaced apart from each other may be greater than 2/3*width d3 of the protrusion and smaller than a width d3 of the protrusion. This is calculated considering that the lithium ions contained in the positive electrode active material layer 150 in which the insulating coating layer 115 is located can migrate left, right, and downward, and that the lithium ions can migrate from both sides.

However, the present disclosure is not limited thereto, and the distance d2 by which the at least one protrusion is spaced apart from each other can be included in the present embodiment as long as the capacity loss due to the insulating coating layer 115 can be minimized while maximizing the effect of preventing reversal of N/P ratio of the insulating coating layer 115.

Accordingly, the distance d2 by which the protrusions are spaced apart from each other is included in the above-mentioned range, so that capacity loss due to the insulating coating layer 115 can be minimized while preventing reversal of N/P ratio by the insulating coating layer 115.

Unlike the same, when the distance d2 by which the protrusions are spaced apart from each other is too small, the area of the positive electrode active material layer 150 exposed toward the negative electrode active material layer 250 is excessively reduced, so that the capacity loss due to the insulating coating layer 115 may increase. Further, when the distance d2 by which the protrusions are spaced apart from each other is too large, the area of the positive electrode active material layer 150 covered by the insulating coating layer 115 is excessively reduced, so that the effect of preventing N/P ratio reversal due to the insulating coating layer 115 can be reduced.

Meanwhile, a battery cell according to another embodiment of the present disclosure includes the electrode assembly described above. Further, the battery cells can be included within the battery module in multiple stacked shapes. In addition, one or more of the battery modules can be packaged in a pack case to form a battery pack.

The above-mentioned battery module or the battery pack including the same can be applied to various devices. Such a device can be applied to a vehicle means such as an electric bicycle, an electric vehicle, or a hybrid vehicle, but the present disclosure is not limited thereto, and is applicable to various devices that can use a battery module or a battery pack including the same, which is also falls under the scope of the present disclosure.

Although preferred embodiments of the present disclosure have been described in detail above, the scope of the present disclosure is not limited thereto, and various modifications and improvements can be made by those skilled in the art, without departing from the scope of the invention described in the appended claims.

### [Description of Reference Numerals]

100: positive electrode
110: positive electrode current collector
110a: first non-coated portion
115: insulating coating layer
150: positive electrode active material layer
210: negative electrode current collector
210a: second non-coated portion
250: negative electrode active material layer
200: negative electrode

## Claims

1. An electrode assembly comprising:
a positive electrode (100) that includes a positive electrode current collector (110) and a positive electrode active material layer (150) located on the positive electrode current collector (110); and
a negative electrode (200) that includes a negative electrode current collector (210) and a negative electrode active material layer (250) located on the negative electrode current collector (210),
wherein the positive electrode (100) and the negative electrode (200) are arranged in a direction in which the positive electrode active material layer (150) and the negative electrode active material layer (250) face each other,
wherein the positive electrode (100) includes an insulating coating layer (115) that covers from an end part of the positive electrode active material layer (150) to at least a part of the positive electrode active material layer (150),
wherein the positive electrode current collector (110) includes a first non-coated portion (110a) where the positive electrode active material layer (150) is not located,
the negative electrode current collector (210) includes a second non-coated portion (210a) where the negative electrode active material layer (150) is not located,
wherein the end part of the positive electrode active material layer (150) is made thinner than the thickness of the central portion of the positive electrode active material layer (150) as it goes toward the first non-coated portion (110a),
the end part of the negative electrode active material layer (250) is made thinner than the thickness of the central portion of the negative electrode active material layer (250) as it goes toward the second non-coated portion (210a),
**characterized in that** the insulating coating layer (115) includes at least one protrusion that protrudes toward the central portion of the positive electrode active material layer (150) on the basis of an end part of the positive electrode active material layer (150), and
the length of the protrusion (d1) is a length to the positive electrode active material layer (150) facing a region of the negative electrode active material layer (250) having a thickness of 0.9 or more and 1.0 or less relative to the thickness of the central portion of the negative electrode active material layer (250), on the basis of a boundary line between the positive electrode active material layer (150) and the first non-coated portion (110a).

2. The electrode assembly according to claim 1 wherein:
the insulating coating layer (115) extends to at least a part of the first non-coated portion (110a) on the basis of a boundary line between the first non-coated portion (110a) and the positive electrode active material layer (150).

3. The electrode assembly according to claim 2 wherein:
the insulating coating layer (115) covers the first non-coated portion (110a) in a range of 10% to 50% based on the total area of the first non-coated portion.

4. The electrode assembly according to claim 2 wherein:
a ratio of covering the positive electrode active material layer (150) and the first non-coated portion (110a) in the insulating coating layer (115) is a width ratio of 2:1 to 1:2.

5. The electrode assembly according to claim 1 wherein:
a portion of the positive electrode active material layer (150) has the same thickness as the thickness of the central portion of the positive electrode active material layer (150).

6. The electrode assembly according to claim 1 wherein:
the width of the protrusion (d3) is a range of absolute values in which the range of 20% to 50% relative to the width of the positive electrode active material layer (150) is divided by the number of the protrusions.

7. The electrode assembly according to claim 1 wherein:
the length of the first non-coated portion (110a) is equal to or greater than the length of the second non-coated portion (210a).

8. The electrode assembly according to claim 1 wherein:
the protrusion is formed of two or more protrusions, which are spaced apart from each other.

9. The electrode assembly according to claim 8 wherein:
the distance by which the protrusions are spaced apart from each other is equal to or smaller than the width of the protrusions.

10. The electrode assembly according to claim 1 wherein:
the insulating coating layer (115) is made of a material through which lithium ions do not pass.

11. The electrode assembly according to claim 1 wherein:
a separator is located between the positive electrode (100) and the negative electrode (200).

12. A battery cell comprising the electrode assembly as set forth in claim 1.

## Patentansprüche

1. Elektrodenanordnung, umfassend:
eine positive Elektrode (100), welche einen positiven Elektroden-Stromsammler (110) und eine positive aktive Elektrodenmaterial-Schicht (150) umfasst, welche an dem positiven Elektroden-Stromsammler (110) angeordnet ist; und
eine negative Elektrode (200), welche einen negativen Elektroden-Stromsammler (210) und eine negative aktive Elektrodenmaterial-Schicht (250) umfasst, welche an dem negativen Elektroden-Stromsammler (210) angeordnet ist;
wobei die positive Elektrode (100) und die negative Elektrode (200) in einer Richtung angeordnet sind, in welcher die positive aktive Elektrodenmaterial-Schicht (150) und die negative aktive Elektrodenmaterial-Schicht (250) zueinander weisen,
wobei die positive Elektrode (100) eine isolierende Beschichtungsschicht (115) umfasst, welche von einem Endteil der positiven aktiven Elektrodenmaterial-Schicht (150) zu wenigstens einem Teil der positiven aktiven Elektrodenmaterial-Schicht (150) bedeckt,
wobei der positive Elektroden-Stromsammler (110) einen ersten nicht-beschichteten Abschnitt (110a) umfasst, an welchem die positive aktive Elektrodenmaterial-Schicht (150) nicht angeordnet ist,
wobei der negative Elektroden-Stromsammler (210) einen zweiten nicht-beschichteten Abschnitt (210a) umfasst, an welchem die negative aktive Elektrodenmaterial-Schicht (150) nicht angeordnet ist,
wobei der Endteil der positiven aktiven Elektrodenmaterial-Schicht (150) dünner als die Dicke des zentralen Abschnitts der positiven aktiven Elektrodenmaterial-Schicht (150) hergestellt ist, in Richtung des ersten nicht-beschichteten Abschnitts (110a) verlaufend,
wobei der Endteil der negativen aktiven Elektrodenmaterial-Schicht (250) dünner als die Dicke des zentralen Abschnitts der negativen aktiven Elektrodenmaterial-Schicht (250) hergestellt ist, in Richtung des zweiten nicht-beschichteten Abschnitts (210a) verlaufend, **dadurch gekennzeichnet,**
**dass** die isolierende Beschichtungsschicht (115) wenigstens einen Vorsprung umfasst, welcher in Richtung des zentralen Abschnitts der positiven aktiven Elektrodenmaterial-Schicht (150) vorsteht, auf der Grundlage eines Endteils der positiven aktiven Elektrodenmaterial-Schicht (150), und
die Länge des Vorsprungs (d1) eine Länge zu der positiven aktiven Elektrodenmaterial-Schicht (150) ist, welche zu einer Region der negativen aktiven Elektrodenmaterial-Schicht (250) weist, welche eine Dicke von 0,9 oder mehr und 1,0 oder weniger relativ zu der Dicke des zentralen Abschnitts der negativen aktiven Elektrodenmaterial-Schicht (250) aufweist,
auf der Grundlage einer Grenzlinie zwischen der positiven aktiven Elektrodenmaterial-Schicht (150) und dem ersten nicht-beschichteten Abschnitt (110a).

2. Elektrodenanordnung nach Anspruch 1, wobei:
sich die isolierende Beschichtungsschicht (115) zu wenigstens einem Teil des ersten nicht-beschichteten Abschnitts (110a) auf der Grundlage einer Grenzlinie zwischen dem ersten nicht-beschichteten Abschnitt (110a) und der positiven aktiven Elektrodenmaterial-Schicht (150) erstreckt.

3. Elektrodenanordnung nach Anspruch 2, wobei:
die isolierende Beschichtungsschicht (115) den ersten nicht-beschichteten Abschnitt (110a) in einem Bereich von 10% bis 50% auf Grundlage der Gesamtfläche des ersten nicht-beschichteten Abschnitts bedeckt.

4. Elektrodenanordnung nach Anspruch 2, wobei:
ein Verhältnis eines Bedeckens der positiven aktiven Elektrodenmaterial-Schicht (150) und des ersten nicht-beschichteten Abschnitts (110a) in der isolierenden Beschichtungsschicht (115) ein Breitenverhältnis von 2:1 bis 1:2 ist.

5. Elektrodenanordnung nach Anspruch 1, wobei:
ein Abschnitt der positiven aktiven Elektrodenmaterial-Schicht (150) dieselbe Dicke wie die Dicke des zentralen Abschnitts der positiven aktiven Elektrodenmaterial-Schicht (150) aufweist.

6. Elektrodenanordnung nach Anspruch 1, wobei:
die Breite des Vorsprungs (d3) ein Bereich von Absolutwerten ist, in welchem der Bereich von 20% bis 50% relativ zu der Breite der positiven aktiven Elektrodenmaterial-Schicht (150) durch die Anzahl der Vorsprünge geteilt ist.

7. Elektrodenanordnung nach Anspruch 1, wobei:
die Länge des ersten nicht-beschichteten Abschnitts (110a) gleich oder größer als die Länge des zweiten nicht-beschichteten Abschnitts (210a) ist.

8. Elektrodenanordnung nach Anspruch 1, wobei:
der Vorsprung aus zwei oder mehr Vorsprüngen gebildet ist, welche voneinander beabstandet sind.

9. Elektrodenanordnung nach Anspruch 8, wobei:
die Distanz, um welche die Vorsprünge voneinander beabstandet sind, gleich oder kleiner als die Breite der Vorsprünge ist.

10. Elektrodenanordnung nach Anspruch 1, wobei:
die isolierende Beschichtungsschicht (115) aus einem Material hergestellt ist, durch welches Lithiumionen nicht hindurchtreten.

11. Elektrodenanordnung nach Anspruch 1, wobei:
ein Separator zwischen der positiven Elektrode (100) und der negativen Elektrode (200) angeordnet ist.

12. Batteriezelle, umfassend die Elektrodenanordnung nach Anspruch 1.

## Revendications

1. Ensemble d'électrodes comprenant :
une électrode positive (100) qui inclut un collecteur de courant d'électrode positive (110) et une couche de matériau actif d'électrode positive (150) située sur le collecteur de courant d'électrode positive (110) ; et
une électrode négative (200) qui inclut un collecteur de courant d'électrode négative (210) et une couche de matériau actif d'électrode négative (250) située sur le collecteur de courant d'électrode négative (210),
dans lequel l'électrode positive (100) et l'électrode négative (200) sont agencées dans une direction dans laquelle la couche de matériau actif d'électrode positive (150) et la couche de matériau actif d'électrode négative (250) font face l'une à l'autre,
dans lequel l'électrode positive (100) inclut une couche de revêtement isolant (115) qui recouvre d'une partie d'extrémité de la couche de matériau actif d'électrode positive (150) à au moins une partie de la couche de matériau actif d'électrode positive (150),
dans lequel le collecteur de courant d'électrode positive (110) inclut une première partie non revêtue (110a) où la couche de matériau actif d'électrode positive (150) n'est pas située,
le collecteur de courant d'électrode négative (210) inclut une seconde partie non revêtue (210a) où la couche de matériau actif d'électrode négative (150) n'est pas située,
dans lequel la partie d'extrémité de la couche de matériau actif d'électrode positive (150) est rendue plus fine que l'épaisseur de la partie centrale de la couche de matériau actif d'électrode positive (150) lorsqu'elle se rapproche de la première partie non revêtue (110a),
la partie d'extrémité de la couche de matériau actif d'électrode négative (250) est rendue plus fine que l'épaisseur de la partie centrale de la couche de matériau actif d'électrode négative (250) lorsqu'elle se rapproche de la seconde partie non revêtue (210a),
**caractérisé en ce que**
la couche de revêtement isolant (115) inclut au moins une saillie saillante vers la partie centrale de la couche de matériau actif d'électrode positive (150) sur la base d'une partie d'extrémité de la couche de matériau actif d'électrode positive (150), et
la longueur de la saillie (d1) est une longueur jusqu'à la couche de matériau actif d'électrode positive (150) faisant face à une région de la couche de matériau actif d'électrode négative (250) présentant une épaisseur de 0,9 ou plus et de 1,0 ou moins par rapport à l'épaisseur de la partie centrale de la couche de matériau actif d'électrode négative (250), sur la base d'une ligne limite entre la couche de matériau actif d'électrode positive (150) et la première partie non revêtue (110a).

2. Ensemble d'électrodes selon la revendication 1, dans lequel :
la couche de revêtement isolant (115) s'étend jusqu'à au moins une partie de la première partie non revêtue (110a) sur la base d'une ligne limite entre la première partie non revêtue (110a) et la couche de matériau actif d'électrode positive (150).

3. Ensemble d'électrodes selon la revendication 2, dans lequel :
la couche de revêtement isolant (115) recouvre la première partie non revêtue (110a) dans une plage de 10 % à 50 % sur la base de la surface totale de la première partie non revêtue.

4. Ensemble d'électrodes selon la revendication 2, dans lequel :
un rapport de recouvrement de la couche de matériau actif d'électrode positive (150) et de la première partie non revêtue (110a) dans la couche de revêtement isolant (115) est un rapport de largeur de 2:1 à 1:2.

5. Ensemble d'électrodes selon la revendication 1, dans lequel :
une partie de la couche de matériau actif d'électrode positive (150) présente la même épaisseur que l'épaisseur de la partie centrale de la couche de matériau actif d'électrode positive (150).

6. Ensemble d'électrodes selon la revendication 1, dans lequel :
la largeur de la saillie (d3) est une plage de valeurs absolues dans laquelle la plage de 20 % à 50 % par rapport à la largeur de la couche de matériau actif d'électrode positive (150) est divisée par le nombre de saillies.

7. Ensemble d'électrodes selon la revendication 1, dans lequel :
la longueur de la première partie non revêtue (110a) est supérieure ou égale à la longueur de la seconde partie non revêtue (210a).

8. Ensemble d'électrodes selon la revendication 1, dans lequel :
la saillie est formée de deux saillies ou plus, qui sont espacées entre elles.

9. Ensemble d'électrodes selon la revendication 8, dans lequel :
la distance d'espacement des saillies entre elles est inférieure ou égale à la largeur des saillies.

10. Ensemble d'électrodes selon la revendication 1, dans lequel :
la couche de revêtement isolant (115) est constituée d'un matériau à travers lequel les ions lithium ne passent pas.

11. Ensemble d'électrodes selon la revendication 1, dans lequel :
un séparateur est situé entre l'électrode positive (100) et l'électrode négative (200).

12. Cellule de batterie comprenant l'ensemble d'électrodes selon la revendication 1.
